# EUROPÄISCHE PATENTSCHRIFT

(11) **EP 1 656 679 B1**
(45) Veröffentlichungstag und Bekanntmachung des Hinweises auf die Patenterteilung: **31.10.2012**
(21) Anmeldenummer: 04740251.6
(22) Anmeldetag: 24.06.2004
(51) Int. Cl.: G21C 9/004

(54) **KERNTECHNISCHE ANLAGE UND VERFAHREN ZUR DRUCKENTLASTUNG EINER KERNTECHNISCHEN ANLAGE**
NUCLEAR SYSTEM AND METHOD FOR THE DECOMPRESSION OF A NUCLEAR SYSTEM
INSTALLATION NUCLEAIRE ET PROCEDE POUR EFFECTUER UNE DECOMPRESSION DANS UNE INSTALLATION NUCLEAIRE

(30) Priorität: 25.06.2003 DE 10328773
(43) Veröffentlichungstag der Anmeldung: 17.05.2006
(73) Patentinhaber: AREVA NP GmbH, 91052 Erlangen (DE)
(72) Erfinder: ECKARDT, Bernd, 63486 Bruchköbel (DE)
(74) Vertreter: Tergau & Walkenhorst
(86) Internationale Anmeldenummer: PCT/EP2004/006837
(87) Internationale Veröffentlichungsnummer: WO 2004/114322

(56) Entgegenhaltungen:
- EP-A- 0 285 845
- EP-A2- 0 338 324
- WO-A1-90/16071
- US-B1- 6 280 502
- US-B1- 6 513 345
- PATENT ABSTRACTS OF JAPAN Bd. 0041, Nr. 06 (C-020), 30. Juli 1980 (1980-07-30) & JP 55 067303 A (MITSUBISHI HEAVY IND LTD), 21. Mai 1980 (1980-05-21)
- DATABASE WPI Section Ch, Week 199341 Derwent Publications Ltd., London, GB; Class J01, AN 1993-327081 XP002310348 & SU 1 768 242 A1 (MOSC BAUMAN TECH COLLEGE POWER EQUIP) 15. Oktober 1992 (1992-10-15)

## Beschreibung

Die Erfindung bezieht sich auf eine kerntechnische Anlage mit einer Sicherheitshülle, an die eine Druckentlastungsleitung angeschlossen ist. Sie betrifft weiter ein Verfahren zur Druckentlastung einer derartigen Anlage.

In einem Kernkraftwerk muss bei Stör- oder Unfallsituationen, abhängig vom jeweiligen Störfall und von gegebenenfalls eingeleiteten Gegenmaßnahmen wie beispielsweise Inertisierung der Containment-Atmosphäre, mit einer möglicherweise signifikanten Druckerhöhung innerhalb der Sicherheitshülle gerechnet werden. Um daraus möglicherweise resultierende strukturelle Beeinträchtigungen der Sicherheitshülle oder des Containments an sich oder auch von darin angeordneten Systemkomponenten zu vermeiden, können Kernkraftwerke für eine bedarfsweise Druckentlastung des Containments durch Ablassen von Containment-Atmosphäre (Venting) ausgelegt sein. Dazu ist üblicherweise an die Sicherheitshülle einer kerntechnischen Anlage eine Druckentlastungsleitung angeschlossen.

In der Containment-Atmosphäre ist jedoch üblicherweise radioaktives Material, wie beispielsweise Edelgase, Jod oder Aerosol, enthalten, das bei einem Venting in die Umgebung des Kernkraftwerks gelangen könnte. Insbesondere bei vergleichsweise schweren Störfällen mit möglicherweise eintretender Kernschmelze können luftgetragene Aktivitätsmengen (Aerosole) innerhalb des Containments in besonders hohen Konzentrationen auftreten, so dass beim Vorhandensein hoher Undichtigkeiten oder bei der Entstehung unzulässiger Überdrucksituationen eine Freisetzung signifikanter Mengen derartiger Aerosole oder Aktivitätsmengen in die Umgebung der kerntechnischen Anlage eintreten könnte. Derartige luftgetragene Aktivitäten könnten insbesondere aufgrund der hohen Halbwertszeiten möglicherweise mitgeführter Komponenten wie beispielsweise Jod- oder Cäsium-Isotopen eine vergleichsweise lange Zeit andauernde Landkontamination verursachen. Um dies zu vermeiden, sind die für ein Venting der Containment-Atmosphäre vorgesehenen Druckentlastungssysteme üblicherweise mit Filter- oder Rückhalteeinrichtungen versehen, die eine Freisetzung von in der Containment-Atmosphäre mitgeführten luftgetragenen Aktivitätsmengen an die Umgebung unterbinden sollen.

Zu diesem Zweck ist beispielsweise aus der EP 0 285 845 B1 ein Konzept zur Druckentlastung eines Kernkraftwerks bekannt, bei dem in eine an die Sicherheitshülle des Kernkraftwerks angeschlossene Druckentlastungsleitung in Reihe ein als Filter zur Rückhaltung luftgetragener Aktivitäten vorgesehener Venturiwäscher sowie eine Drosseleinrichtung geschaltet sind. Der Venturiwäscher umfasst dabei eine Anzahl von in einer in einem Behälter vorgehaltenen Waschflüssigkeit angeordneten Venturirohren, die mit dem in der Druckentlastungsleitung geführten Gasstrom beaufschlagbar sind.

Die Venturirohre umfassen dabei jeweils eine düsenartig ausgebildete Verengungsstelle, an der der durchströmende Gasstrom auf eine besonders hohe Strömungsgeschwindigkeit beschleunigt wird.

Bei dem in der EP 0 285 845 B1 beschriebenen System ist die in Reihe zum Venturiwäscher geschaltete Drosseleinrichtung für einen Betrieb mit so genannter kritischer Entspannung ausgelegt. Bei einer kritischen Entspannung stellen sich die Druckverhältnisse im Leitungssystem, also insbesondere der Druckabfall über die Drosseleinrichtung, derart ein, dass das in der Leitung strömende Medium die Drosseleinrichtung mit Schallgeschwindigkeit durchströmt. Beim System nach der EP 0 285 845 B1 wird dieser Effekt dazu genutzt, im Ansprechfall, also bei einer Druckentlastung des Containments, einen über die Zeit gleichbleibenden Volumendurchsatz in der Druckentlastungsleitung einzustellen.

Ähnliche Vorrichtungen sind beispielsweise in EP0338324 oder auch in WO90/16071 beschrieben.

Der Erfindung liegt daher die Aufgabe zugrunde, eine kerntechnische Anlage der oben genannten Art anzugeben, bei der im Falle einer Druckentlastung auch feinste luftgetragene Aktivitäten oder Aerosole mit besonders hoher Zuverlässigkeit im Venturiwäscher zurückgehalten werden, so dass eine Freisetzung an die Umgebung mit besonders hoher Zuverlässigkeit ausgeschlossen ist. Weiterhin soll ein Verfahren zur Druckentlastung einer derartigen kerntechnischen Anlage angegeben werden.

Bezüglich der kerntechnischen Anlage wird diese Aufgabe erfindungsgemäß durch die Merkmalskombination aus Anspruch 1 gelöst. Der Venturiwäscher und die Drosseleinrichtung sind derart dimensioniert, dass sich bei einer kritischen Entspannung eines in der Druckentlastungsleitung strömenden Luft-Dampf-Gemisches an der Drosseleinrichtung im Venturiwäscher eine Strömungsgeschwindigkeit des Luft-Dampf-Gemisches von mehr als 150 m/s, vorzugsweise von mehr als 200 m/s, einstellt.

Die Dimensionierung erfolgt dabei bevorzugtermaßen derart, dass diese hohe Geschwindigkeit überwiegend im gesamten Betriebsüberdruckbereich der Abscheideeinrichtung, unabhängig vom jeweiligen Betriebsdruck von z.B. 2 -10 bar, herrscht. Die bei höherem Betriebsdruck der Wäschereinrichtung zur Erzeugung der entsprechenden Beschleunigung der Gase höherer Dichte anfallenden Venturidruckverluste von z.B. > 0,5 bar bei 1 bar und z.B. > 2 bar bei Drücken > 5 bar werden dabei durch die Kombination von Venturiwäscher und Drossel passiv über den vollständigen Betriebsbereich eingestellt.

Die Erfindung geht dabei von der Überlegung aus, dass zur Abscheidung luftgetragener Aktivitäten oder Aerosole in einem Venturiwäscher oder einem Venturirohr durch die Einspeisung von Wasser in das Rohrinnere aufgrund der dort herrschenden Strömungsverhältnisse ein vergleichsweise feiner Tröpfchennebel erzeugt wird, wobei die abzuscheidenden luftgetragenen Aktivitäten oder Aerosole in derartige Tröpfchen eingebracht und somit mit diesen aus dem Gasstrom entfernt werden können. Eine besonders hohe Abscheidewirkung auch für feinste Aerosole ist somit erreichbar, indem die Wahrscheinlichkeit, mit der die Aerosole auf geeignete Wassertröpfchen, insbesondere unterstützt durch entsprechend hohe Waschflüssigkeitsbeladungen, treffen und in diesen eingeschlossen werden, besonders hoch gehalten wird.

Wie sich überraschenderweise herausgestellt hat, steigt gerade bei Venturirohren in denen in der Art einer passiven Bauweise die Einspeisung der Waschflüssigkeit in das Rohrinnere über den an der Verengungsstelle herrschenden Unterdruck und somit ohne äußere Antriebsmittel gewährleistet ist, die Auftreff- und Einschlusswahrscheinlichkeit auch feinster Aerosole im Tröpfchennebel in erheblichem, weit überproportionalem Maße an, so dass bei sehr hohen Strömungsgeschwindigkeiten des Gasstroms im Venturirohr Abscheideraten für Mischaerosole einer Partikelgröße von etwa 1 µm von mehr als 99,9 % und für vergleichsweise feine Aerosole einer Partikelgröße von weniger als 0,5 µm von 98 % und mehr in der Waschflüssigkeit erreichbar sind. Das Druckentlastungs- und Aktivitätsrückhaltesystem der kerntechnischen Anlage ist daher für die Einhaltung derartig hoher Strömungsgeschwindigkeiten im Druckentlastungsfall ausgelegt.

Um dabei gerade im Hinblick auf die sich bei einem Störfallszenario möglicherweise über den gesamten Verlauf des Störfalls hinweg in großem Umfang ändernden charakteristischen Parameter wie beispielsweise Anlagendruck in jeder Phase eines möglichen Störfalls eine derartig hohe Abscheiderate zu gewährleisten und somit eine Freisetzung kontaminierender Bestandteile in die Umgebung in jeder Phase eines Störfalls in größtmöglichem Umfang zu verhindern, ist das Druckentlastungs- und Aktivitätsrückhaltesystem der kerntechnischen Anlage zudem für einen derartig hohen Abscheidegrad nahezu unabhängig vom im Sicherheitsbehälter der kerntechnischen Anlage herrschenden Systemdruck ausgelegt. Dabei wird gezielt die Erkenntnis genutzt, dass bei einer mit so genannter kritischer Entspannung arbeitenden Drosseleinrichtung diese vom Strömungsmedium unabhängig vom anliegenden Eingangsdruck mit dessen Schallgeschwindigkeit durchströmt wird.

Im Zustand kritischer Entspannung ist somit der Volumendurchsatz durch die Drosseleinrichtung unabhängig vom anliegenden Eingangsdruck konstant. Durch eine geeignete Kombination des Venturiwäschers mit der Drosseleinrichtung und gegebenenfalls mit einem metallischen Feinaerosolnachfilter kann somit sichergestellt werden, dass im Fall einer kritischen Entspannung über die Drosseleinrichtung der Volumendurchsatz des strömenden Mediums durch den Venturiwäscher und gegebenenfalls den Feinaerosolnachfilter unabhängig vom in der Sicherheitshülle herrschenden, an die Eingangsseite der Drosseleinrichtung weitergegebenen Systemdruck nahezu konstant gehalten werden kann. Durch die Kombination der Drosseleinrichtung mit dem Venturiwäscher kann somit nahezu über das gesamte Störfallszenario hinweg, nämlich so lange, wie aufgrund der herrschenden Druckverhältnisse eine kritische Entspannung über die Drosseleinrichtung eintritt, ein gleichbleibend hoher Abscheidegrad am Venturiwäscher und gegebenenfalls am Feinaerosolnachfilter gewährleistet werden.

Zu diesem Zweck sind der Venturiwäscher und die Drosseleinrichtung in der Art einer Abstimmung aufeinander jeweils geeignet dimensioniert, so dass sich bei an der Drosseleinrichtung vorliegender kritischer Entspannung die gewünschten Strömungsverhältnisse mit besonders hoher Strömungsgeschwindigkeit im Venturiwäscher und gegebenenfalls optimaler Geschwindigkeit im Feinaerosolnachfilter einstellen. Die für den gewünschten hohen Abscheidegrad erforderliche Mindert-Strömungsgeschwindigkeit des Strömungsmediums im Venturiwäscher kann dabei von der genauen Zusammensetzung des Strömungsmediums abhängen und kann sich bei ändernden Gaszusammensetzungen, z.B. bei höherem H₂-Anteil, zu höheren Werten verschieben.

Wie sich aber herausgestellt hat, ist für die im Fall der Druckentlastung der Sicherheitshülle einer kerntechnischen Anlage möglicherweise auftretenden Strömungsmedien ein ausreichend hoher Abscheidegrad erreichbar, in dem die Kombination aus Venturiwäscher und Drosseleinrichtung in der Art einer Eichung oder Referenz derart ausgelegt und dimensioniert ist, dass im Fall eines in der Druckentlastungsleitung strömenden Luft-Dampf-Gemisches bei an der Drosseleinrichtung anfallender kritischer Entspannung im Venturiwäscher eine Strömungsgeschwindigkeit des Luft-Dampf-Gemisches von mehr als 150 m/s, vorzugsweise von mehr als 200 m/s, anliegt. Die Strömungsgeschwindigkeit des Strömungsmediums wird dabei insbesondere im Bereich der Verengungsstelle des jeweiligen Venturirohres bestimmt.

Die über die Kombination aus Venturiwäscher und Drosselungseinrichtung eingestellte hohe Geschwindigkeit kann sich bei ändernden Gaszusammensetzungen, z.B. höherem H₂-Anteil, wegen der höheren Schallgeschwindigkeit zu noch höheren Werten verschieben. Es wurde weiterhin gefunden, dass sich im Venturiwäscher im Zweiphasengemisch - bestehend aus Gasgemisch und Wasserflüssigkeit - eine kritische maximale Geschwindigkeit von ca. 270 - 300 m/s einstellt. Durch die bevorzugte Wahl einer besonders hohen Venturiauslegungsgeschwindigkeit von z.B. 200 m/s, die etwa 2/3 der maximalen Zweiphasengemischgeschwindigkeit von etwa 300 m/s entspricht, kann somit sichergestellt werden, dass auch beim Vorliegen von Gemischen mit höherer Schallgeschwindigkeit eine inhärent sichere Durchsatzbegrenzung möglich wird und die nachfolgenden Rückhalteeinrichtungen zuverlässig vor Überlastung geschützt werden.

Vorteilhafterweise umfasst der Venturiwäscher eine Mehrzahl von Venturirohren. Diese können als so genannte Kurzventurirohre ausgeführt sein, deren Auslässe unterhalb des vorgesehenen Sollpegels der Waschflüssigkeit angeordnet sind, so dass die Venturirohre im Wesentlichen vollständig in die Waschflüssigkeit eingetaucht sind. Hierbei erweist sich als besonders günstig, dass die höherliegende Abscheider-Filtersektion durch ein Überlaufwehr vor dem auftetenden Wasseraufwurf geschützt wird, so dass auch bei dieser Variante eine reduzierte Komponentenhöhe möglich wird. Bei dieser Ausgestaltung erweist sich für eine besonders hohe Gesamtabscheidung eine Kombination mit einem nachgeschalteten Metallfaserfilter als besonders vorteilhaft.

Durch primär oberhalb der Waschflüssigkeit ausblasende Venturidüsenrohre kann der die Komponentengröße bestimmende Wasseraufwurf minimiert werden und weiterhin eine deutlich höhere Leerrohrgeschwindigkeiten im Venturiwäschereinrichtung eingestellt werden. Die Folge sind ein erheblich geringerer Venturiwäscherdurchmesser und eine geringere Komponentenhöhe sowie ein entsprechend reduzierter Verbrauch an Waschflüssigkeit. Durch die hierdurch ermöglichte kompakte Bauweise, besonders in Kombination mit vorhandenen Wasserreservoirs, wird die leichte Integration der Einrichtung auch in besonders geschützten Gebäudeteilen der Anlage, wie z.B. das Reaktorgebäude, bei reduziertem Abschirmaufwand, möglich.

Vorteilhafterweise ist somit ein vergleichsweise großer Anteil der Venturirohre als so genannte Langventurirohre ausgestaltet, deren Auslässe oberhalb des vorgesehenen Sollpegels der Waschflüssigkeit angeordnet sind. Um darüber hinaus eine Sedimentation im Bereich des Behälters, die zu erhöhtem Wartungs- und Pflegebedarf führen könnte, zu verhindern, ist der Venturiwäscher in weiterer vorteilhafter Ausgestaltung für eine vergleichsweise intensive Verwirbelung und Zirkulation der Waschflüssigkeit im Betriebsfall ausgelegt. Dazu ist vorteilhafterweise ein kleiner Anteil der Venturirohre, vorzugsweise bis zu etwa 10 %, mit abwärts gerichteter Auslassrichtung innerhalb des Behälters und unterhalb des Sollpegels der Waschflüssigkeit angeordnet.

Als besonders günstig für die Sicherstellung hoher Abscheideraten hat sich die Einstellung einer vergleichsweise hohen Wasserbeladung im Venturiwäscher von beispielsweise mehr als 5 Liter, vorzugsweise mehr als 10 Liter, Waschflüssigkeit pro Kubikmeter Gas erwiesen. Um dies sicherzustellen, weisen die Venturirohre in weiterer vorteilhafter Ausgestaltung eine sich über den Düsenumfang erstreckende Ringschlitzeinspeisung mit einem Öffnungswinkel von 20° bis 85°, vorzugsweise 30° bis 45°, auf. Für eine derartig hohe Wasserbeladung weisen die Venturirohre des Venturiwäschers jeweils ein Verhältnis ihrer Kehlenquerschnittsfläche zur Eintrittsfläche für die Waschflüssigkeit von weniger als 10:1, vorzugsweise von etwa 3:1, auf. Die Kehlenquerschnittsfläche gibt dabei die vom Strömungsmedium frei durchströmbare Querschnittsfläche an der Verengungsstelle innerhalb des jeweiligen Venturirohres an.

In besonders vorteilhafter Ausgestaltung sind die Venturirohre des Venturiwäschers derart ausgelegt, dass die passive Waschflüssigkeitsansaugung und -verteilung aufgrund des durch das durchströmende Medium erzeugten Unterdrucks bis in den Kernstrahlbereich im Inneren des Venturirohres sichergestellt ist. Dazu sind die Venturirohre des Venturiwäschers vorteilhafterweise als Rundventurirohre mit einer Kehlenbreite von weniger als etwa 80 mm, vorzugsweise von weniger als etwa 40 mm, oder als Flachventuridüsen mit einer Kehlenbreite von weniger als etwa 100 mm ausgeführt. Zusätzlich oder alternativ weisen die Venturirohre des Venturiwäschers vorteilhafterweise ein Verhältnis von Höhe zu Kehlenbreite von mehr als 5, vorzugsweise von mehr als 10, auf.

Eine besonders kompakte Bauweise für das der kerntechnischen Anlage zugeordnete Druckentlastungs- und Aktivitätsrückhaltesystem mit entsprechend reduziertem Herstellungs- und Montageaufwand sowie leichter Unterbringbarkeit im geschützten Anlagenbereich ist erreichbar, indem der mit dem Venturiwäscher bestückte Behälter vorteilhafterweise waschflüssigkeitsseitig mit einem weiteren Waschflüssigkeitsspeicher verbunden ist. Damit kann die im Behälter selbst vorgehaltene Menge an Waschflüssigkeit vergleichsweise gering gehalten werden, wobei im Bedarfsfall, also insbesondere bei entstehendem Verbrauch an Waschflüssigkeit, eine bedarfsweise Nachspeisung aus dem weiteren Waschflüssigkeitsspeicher vorgesehen sein kann. Das in diesem Sinne nicht aktive, insbesondere größere, Waschflüssigkeitsreservoir kann hierbei in einem separaten Lagerbehälter bevorratet werden und insbesondere zur Ergänzung von verdampfter Waschflüssigkeit dienen. Der Füllstand im Behälter kann dabei durch Anordnung des weiteren Waschflüssigkeitsspeichers in gleicher geodätischer Höhe oder mit einer Füllstands-Schwimmersteuerung passiv eingestellt sein. Als weiterer Waschflüssigkeitsspeicher können dabei auch insbesondere bereits ohnehin vorgesehene weitere Wasserreservoirs wie beispielsweise Abwasserbehälter, Deionatversorgung oder ähnliches genutzt sein, wobei die bedarfsweise Zuspeisung von Waschflüssigkeit in den Behälter über Gefälle oder mittels aus einem Druckluftspeicher betriebenen Membranpumpen, unabhängig von der möglicherweise ausgefallenen Stromversorgung, erfolgen kann.

Eine besonders wirksame Aktivitätsrückhaltung ist erreichbar, indem das der kerntechnischen Anlage zugeordnete Druckentlastungs- und Aktivitätsrückhaltesystem in besonders vorteilhafter Ausgestaltung für eine bedarfsweise Rezirkulation der in der Waschflüssigkeit abgeschiedenen luftgetragenen Aktivitäten oder Aerosole in das Containment hinein ausgelegt ist. Dazu ist der mit dem Venturiwäscher versehene Behälter in besonders vorteilhafter Ausgestaltung waschflüssigkeitsseitig über eine Rückspeiseleitung mit dem Innenraum der Sicherheitshülle der kerntechnischen Anlage verbunden. Durch eine derartige Ausgestaltung kann bedarfsweise, also insbesondere ständig oder in zyklischen Intervallen, die im Behälter befindliche, mit aus dem Gasstrom entfernten Aktivitäten oder Aerosolen belastete Waschflüssigkeit ganz oder teilweise in die Sicherheitshülle hineinverlagert werden, so dass die insgesamt behandlungsbedürftige Aktivität zuverlässig im Containment verbleibt. Durch die mittels Rückspeisung erzielte Aktivitätsreduzierung in der Waschflüssigkeit werden auftretende Resuspensionseffekte, die zum Aktivitätsaustrag in die nachgeschalteten Filtereinrichtungen führen könnten, minimiert.

Dabei kann eine Nachspeisung der Waschflüssigkeit in den Behälter insbesondere aus dem weiteren Waschflüssigkeitsreservoir heraus erfolgen. Durch eine derartige Rezirkulation oder Rückspeisung der Aktivitäten kann die insgesamt in der Waschflüssigkeit enthaltene Aktivitätsmenge- und Konzentration besonders gering gehalten werden, so dass beispielsweise auch zum Aktivitätsaustrag in nachgeschaltete Filtereinrichtungen führende Resuspensionseffekte besonders gering gehalten werden können. Hierdurch ist, in Kombination mit dem hohen Venturiabscheidegrad, eine Reduzierung der Filterbeladung und damit der erforderlichen Filterflächen möglich. Weiterhin ist insbesondere bei vergleichsweise lang ausgedehntem Ventingbetrieb über mehrere Tage eine signifikante Verbesserung der Aktivitätsrückhaltung insbesondere bei Jod und bei Aerosolen erreichbar.

Weiterhin ist durch eine derartige Rückspeisung oder Rezirkulation der im Venturiwäscher abgeschiedenen Aktivitäten die über die Aerosole oder luftgetragenen Aktivitäten auftretende Nachzerfallswärme vom Behälter fern gehalten und in das Containment herein zurück verlagert, so dass die hieraus entstehenden möglichen Belastungen im Behälter, beispielsweise durch Flüssigkeitsverdampfung, besonders gering gehalten werden können, so dass hierdurch ein vergleichsweise lang ausgedehnter Ventingbetrieb über mehrere Tage und Wochen möglich wird, ohne dass die nachfolgende Metallfaserfeinfilter durch Resuspensionsaerosole und die Jodabscheidung am Jodsorptionsfilter durch Jodresuspension überlastet werden. Solche Auslegungsanforderungen mit langfristigen Ventingbetrieb können somit auch für neuere Reaktoranlagen mit erhöhten Anforderungen zur Beherrschung von schweren Störfällen - z.B. in Kombination mit einer unabhängigen Waschflüssigkeitsnachspeisung über z.B. Membranpumpen, etc. und Aktivitätsrückführung über mengenbegrenzende Drosseln in das Containment - sicher und besonders kostengünstig erfüllt werden.

Gerade durch die dadurch erreichbare Vermeidung der Verdampfung von Waschflüssigkeit ergibt sich insgesamt, also auch unter Berücksichtigung der möglicherweise vorgesehenen Nachspeisung von Waschflüssigkeit in den Behälter hinein, ein insgesamt reduzierter Bedarf an Waschflüssigkeit.

Um die Anzahl der erforderlichen, im Hinblick auf erhebliche Sicherheitsanforderungen ausgelegten Durchführungen durch die Sicherheitshülle der kerntechnischen Anlage besonders gering zu halten, ist die Rückspeiseleitung dabei in weiterer vorteilhafter Ausgestaltung über die Druckentlastungsleitung mit dem Innenraum der Sicherheitshülle verbunden. Die Rezirkulation oder Rückspeisung erfolgt dabei durch Strahleinspeisung in den Zentralbereich der Druckentlastungsleitung, so dass im Gegenstrom zum Druckentlastungs-Gasstrom eine Überführung der aktivitätsbeladenen Waschflüssigkeit in das Containment hinein erfolgen kann.

Vorteilhafterweise ist der Venturisektion eine zweifache Schwerkrafttropfenabscheidung mit Tropfenrückführung nachgeschaltet. Zur Tropfenabscheidung ist vorzugsweise ein Fliehkraftabscheider, betrieben mit hohen Geschwindigkeiten > 10 m/s, eingesetzt, der gleichzeitig über die Erzeugung eines Drosseleffektes zur Überhitzung genutzt sein kann. Bei einer gegebenenfalls nachgeschalteten Metallfilterstufe tritt somit kein Tropfenanfall auf, so dass diese Einheit auch tieferliegend oder auf gleicher Höhe angeordnet werden kann, was Raumbedarf und Raumhöhe reduziert

Zur weiteren Entfeuchtung und Vorfilterung wird vorteilhafterweise ein Faserabscheider im Fortluftstrom mit Fasern < 50 µm mit einer Vorfiltereinheit mit Fasern < 20 µm, vorzugsweise in abfallenden Faserstärken, kombiniert. Die Feinfilterung erfolgt vorzugsweise mit Fasern von bis zu < 5 µm, so dass auch die geringe Menge penetrierender Feinaerosole von < 0,5 µm noch weitgehend zurück gehalten werden kann. Die Filterelemente sind vorzugsweise aus Edelstahlfasern hergestellt. Die Feinfilterung kann auch mit gesinterten Faserfiltern mit Porendurchmessern < 2 µm erfolgen.

Zur effektiven Organojodabscheidung ist nach der Drosselung vorzugsweise ein Molekularsieb, beispielsweise belegt mit Silbernitrat oder anderen Silberverbindungen, etc, im Langzeitbetrieb des Rückhaltesystems vorgesehen. Die Überhitzung des Gasstromes vor Eintritt in das Molekularsieb erfolgt dabei zweckmäßigerweise primär durch Drosselung, bezogen auf den maximalen Betriebsdruck um mindestens 50 % des noch verfügbaren Druckgefälles von z.B. > 2 bar. Hierdurch wird eine passive und einfache Überhitzung des Gasstroms im Jodsorptionsfilter ermöglicht.

Die Rückhalteeinrichtungen, also Venturiwäscher und Metallfaserfilter, können auch höhenmäßig gestaffelt innerhalb eines Behälters untergebracht werden, wobei die hochliegenden Filter mit einem Einlaufwehr versehen werden, so dass sich eine besonders geringe Bauhöhe ergibt.

Um dabei die Rückspeisung in der Art eines vollständig passiven Systems ohne Rückgriff auf externe aktive Komponenten zu ermöglichen, ist der Behälter in weiterer vorteilhafter Ausgestaltung geodätisch zumindest etwa 5 m, vorzugsweise mindestens 10 m, höher liegend als die Austrittsstelle der Druckentlastungsleitung aus der Sicherheitshülle angeordnet. Damit ist die Rückspeisung der aktivitätsbeladenen Waschflüssigkeit durch die Druckentlastungsleitung in das Containment hinein allein aufgrund des geodätischen Drucks in der Wassersäule zwischen Druckentlastungsleitung und Behälter möglich, so dass die Strahlrückspeisung im Gegenstrom zum Gasstrom ohne weitere aktive Hilfsmittel erfolgen kann.

Vorteilhafterweise ist die Waschflüssigkeit in besonderem Maße für eine effektive Rückhaltung von Jod oder jodhaltigen Verbindungen ausgeführt. Dazu ist im Behälter vorteilhafterweise eine Waschflüssigkeit mit einem pH-Wert von mindestens 9 vorgehalten, wobei dieser pH-Wert beispielsweise durch Zugabe von NaOH, anderer Laugen und/oder Natriumthiosulfat erfolgen kann. Die Zudosierung dieser Chemikalien zur Waschflüssigkeit kann vorteilhafterweise durch Ansaugung über eine im Frischwasserstrom befindliche Strahlpumpe aus einem separaten Chemikalienbehälter zur Einstellung einer Konzentration in der Waschflüssigkeit von 0,5 bis 5 Gewichtsprozent erfolgen.

Eine besonders kompakte Bauweise ist erreichbar, indem in weiterer vorteilhafter Ausgestaltung die Drosseleinrichtung in den Behälter integriert ist.

Durch eine zusätzlich vorgesehene direkte Eispeisung von kaltem Wasser, vollständig oder teilweise über die Rückhalteeinrichtung in den Reaktordruckbehälterbereich, im Gegenstrom zum Ventgas, vorzugsweise als einfache Notfallmaßnahmen mittels vorhandener Systeme, wie z.B mittels einer Feuerwehrpumpe oder über andere Systeme kann vorteilhafterweise gleichzeitig eine Aktivitätsrezirkulation und eine Kühlung des Reaktorkernes durch Energieaufnahme erreicht werden. Durch insbesondere in der frühen Unfallphase höhere Einspeisemengen mit ansteigendem Füllstand im Containment kann zudem eine weitere vorteilhafte Verringerung des abzusaugenden Dampf-Gasgemisches und somit gleichzeitig eine Verkleinerung der Abmessungen der Rückhalteeinrichtung oder Absaugeeinrichtung erreicht werden

Bezüglich des Verfahrens zur Druckentlastung einer kerntechnischen Anlage der genannten Art wird die Aufgabe gelöst, indem der Venturiwäscher mit einer Strömungsgeschwindigkeit des in der Druckentlastungsleitung geführten Mediums von mehr als 150 m/s, vorzugsweise von mehr als 200 m/s, beaufschlagt wird.

Die mit der Erfindung erzielten Vorteile bestehen insbesondere darin, dass durch die gezielte Kombination der Drosseleinrichtung mit dem Venturiwäscher durch die aufeinander abgestimmte Dimensionierung im Wesentlichen über den gesamten Verlauf eines Störfalls hinweg sichergestellt werden kann, dass der Venturiwäscher mit einer besonders hohen Strömungsgeschwindigkeit des Druckentlastungs-Gasstroms durchströmt wird. Dadurch ist in jedem Fall eine besonders hohe Abscheidewirkung von mehr als 98 % der mitgeführten luftgetragenen Aktivitäten oder Aerosole bereits in der Waschflüssigkeit, insbesondere auch der Feinaerosole einer Partikelgröße von weniger als 0,5 µm, sichergestellt, so dass eine Freisetzung von Aktivitäten in die Umgebung besonders zuverlässig vermieden wird.

Das durch den Venturiwäscher, die nachgeschaltete Drosseleinrichtung und gegebenenfalls den Metallfaserfeinfilter gebildete Druckentlastungs- und Aktivitätsrückhaltesystem stellt dabei in der Art eines passiv arbeitenden Systems selbsttätig in nahezu allen Phasen eines Störfalls einen im Wesentlichen konstanten Durchfluss durch den Venturiwäscher unabhängig vom in der Sicherheitshülle herrschenden Systemdruck sicher, so dass dieses System insbesondere für einen so genannten Gleitdruckbetrieb, also für eine direkte Beaufschlagung mit dem Systemdruck in der Sicherheitshülle ohne vorgeschaltete weitere Drosseleinrichtung, geeignet ist. Abhängig vom in der Druckentlastungsleitung geführten Strömungsmedium kann der nahezu konstante Durchsatz durch den Venturiwäscher dabei über die kritische Entspannung über die Drosseleinrichtung sichergestellt werden, durch die unabhängig vom anliegenden Systemdruck die Strömungsgeschwindigkeit des Mediums in der Drosseleinrichtung in etwa dessen Schallgeschwindigkeit beträgt, so dass entsprechend auch der Volumendurchsatz durch den Venturiwäscher annähernd druckunabhängig konstant ist. Im Fall eines in der Druckentlastungsleitung geführten Gasgemisches kann zudem bei der Einhaltung vergleichsweise hoher Düsengeschwindigkeiten von 150 m/s bis 200 m/s - begrenzt auf < 300 m/s bei z.B. hohem H₂-Anteil - eine gemischunabhängige passive Durchsatzbegrenzung durch den Venturiwäscher bereits aufgrund des von diesem erzeugten Druckverlustes gewährleistet werden.

Durch die Kombination der Hochgeschwindigkeits- Venturiwäschereinrichtung mit Rückführung kombiniert mit den nachgeschalteten Metallfaserfiltem kann auch im Langzeitbetrieb, unabhängig von der Aerosolkonzentration im Containment, ein Gesamtabscheidegrad von > 99,99 bis 99,999% gewährleistet werden.

Ein Ausführungsbeispiel der Erfindung wird anhand einer Zeichnung näher erläutert. Darin zeigen:
- Fig. 1: schematisch eine kerntechnische Anlage mit zugeordnetem Druckentlastungs- und Aktivitätsrückhaltesystem,
- Fig. 2: einen Behälter mit Venturiwäscher, und
- Fig. 3: eine Einspeisestelle der Anlage nach Fig. 1 im Ausschnitt.

Gleiche Teile sind in allen Figuren mit denselben Bezugszeichen versehen.

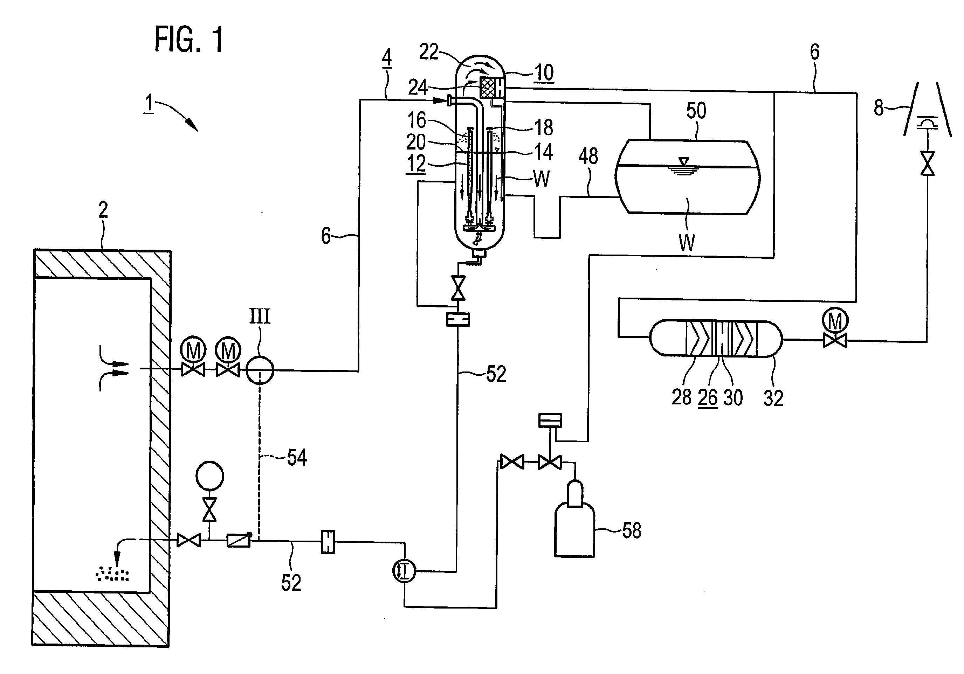

Die kerntechnische Anlage 1 nach Fig. 1 umfasst eine auch als Containment bezeichnete Sicherheitshülle 2, die die zur Elektrizitätserzeugung vorgesehenen nuklearen Komponenten und weitere Systemkomponenten enthält. Um auch für den Fall eines vergleichsweise gravierenden Störfalls, bei dem infolge von innerhalb der Sicherheitshülle 2 ablaufenden Vorgängen mit einem starken Druckanstieg innerhalb der Sicherheitshülle 2 gerechnet werden muss, strukturelle Beeinträchtigungen oder Instabilitäten der Sicherheitshülle 2 sicher ausschließen zu können, ist die kerntechnische Anlage 1 mit einem an die Sicherheitshülle 2 angeschlossenen Druckentlastungs- und Aktivitätsrückhaltesystem 4 ausgerüstet. Dieses ermöglicht im Bedarfsfall ein gezieltes und kontrolliertes Ablassen von Containment-Atmosphäre, auch als Venting bezeichnet, aus der Sicherheitshülle 2 in deren Umgebung.

Das Druckentlastungs- und Aktivitätsrückhaltesystem 4 umfasst eine an die Sicherheitshülle 2 angeschlossene Druckentlastungsleitung 6, die auslassseitig an einen Abblasekamin 8 angeschlossen ist. Zur Vermeidung einer Kontamination der Umgebung der kerntechnischen Anlage 1 im Falle eines Ventings oder eines Ablassens von Containment-Atmosphäre ist das Druckentlastungs- und Aktivitätsrückhaltesystem 4 für eine zuverlässige Rückhaltung auch von in der Containment-Atmosphäre enthaltenen luftgetragenen Aktivitäten oder Aerosolen ausgelegt. Dazu umfasst das Druckentlastungs- und Aktivitätsrückhaltesystem 4 einen als Filtereinrichtung für derartige luftgetragene Aktivitäten oder Aerosole vorgesehenen Nasswäscher 10.

Der Nasswäscher 10 umfasst seinerseits einen in die Druckentlastungsleitung 6 geschalteten Venturiwäscher 12, der in einem Behälter 14 mit einer Waschflüssigkeit W angeordnet ist. Der Venturiwäscher 12 umfasst eine Anzahl von Venturirohren 16, die mit ihren Auslässen 18 in einen im Behälter 14 oberhalb des Sollpegels 20 der Waschflüssigkeit W befindlichen Gasraum 22 münden. Im Gasraum 22, und somit in den Behälter 14 integriert, ist eine Drosseleinrichtung 24 angeordnet, die somit gasstromseitig in Reihe zum Venturiwäscher 12 geschaltet ist. Die Drosseleinrichtung 24 ist ihrerseits ausgangsseitig an ein weiteres Teilstück der Druckentlastungsleitung 6 angeschlossen, das über eine Filtereinrichtung 26 mit dem Abblasekamin 8 verbunden ist. Die Filtereinrichtung 26 umfasst ihrerseits einen Metallfaserfilter 28, eine Zwischendrossel 30 sowie nachfolgend ein Molekularsieb 32. Der Metallfaserfilter 28 ist dabei insbesondere als Feinfilter mit Faserfiltermatten mit abfallendem Faserdurchmesser von 40 µm bis ungefähr 1 µm ausgestaltet, so dass insbesondere auch penetrierende Feinaerosole mit einer Partikelgröße von weniger als 0,5 µm effektiv zurück gehalten werden können. Zusätzlich oder alternativ kann dem Venturiwäscher 12 auch eine bevorzugt zweifach ausgeführte Schwerkraft - Tropfenabscheidung mit Tropfenrückführung nachgeschaltet sein.

Das Druckentlastungs- und Aktivitätsrückhaltesystem 4 der kerntechnischen Anlage 1 ist für eine besonders zuverlässige Aktivitätsrückhaltung und insbesondere für einen Abscheidegrad der Wäschereinrichtung auch vergleichsweise feinkörniger Aerosole mit einer Partikelgröße von weniger als 0,5 µm von 98 % oder darüber ausgelegt. Zu diesem Zweck sind der Venturiwäscher 12 und die Drosseleinrichtung 24 hinsichtlich ihrer Dimensionierung gezielt aufeinander abgestimmt. Als Auslegungsziel ist dabei zugrunde gelegt, dass im Ansprechfall der Venturiwäscher 12 vom Druckentlastungs-Gasstrom mit einer besonders hohen Strömungsgeschwindigkeit von mehr als 150 m/s, insbesondere von mehr als 200 m/s, durchströmt wird. Wie sich nämlich herausgestellt hat, ist bei derartig hohen Strömungsgeschwindigkeiten ein nahezu sprunghafter Anstieg in der Abscheiderate erzielbar, wobei insbesondere auch feine und feinste Aerosolpartikel in Waschflüssigkeitströpfchen eingebunden und somit abgeschieden werden.

Durch geeignete Wahl insbesondere der Strömungsquerschnitte ist dabei sichergestellt, dass in nahezu allen Phasen eines Störfallszenarios eine derartig hohe Strömungsgeschwindigkeit im Venturiwäscher 12 anliegt. Dazu ist einerseits die Drosseleinrichtung 24 dafür ausgelegt, im Ansprechfall im Wesentlichen, d. h. bei einem Systemdruck oberhalb eines Grenzdrucks, im Bereich der kritischen Entspannung zu arbeiten. Dadurch stellt sich im die Drosseleinrichtung 24 durchströmenden Gasstrom unabhängig vom in der Sicherheitshülle 2 herrschenden Systemdruck die für das Strömungsmedium relevante Schallgeschwindigkeit ein. Aufgrund dieser vom Systemdruck in der Sicherheitshülle 2 unabhängigen Strömungsgeschwindigkeit in der Drosseleinrichtung 24 ist der Volumendurchsatz durch die Drosseleinrichtung 24 im Wesentlichen unabhängig vom in der Sicherheitshülle 2 herrschenden Systemdruck konstant, so dass entsprechend auch der Volumendurchsatz durch den vorgeschalteten Venturiwäscher 12 konstant bleibt.

Zur Ermöglichung eines so genannten Gleitdruckbetriebs, also einer unmittelbaren Beaufschlagung mit dem in der Sicherheitshülle 2 herrschenden Systemdruck, ist das Druckentlastungs- und Aktivitätsrückhaltesystem 4 somit dafür ausgelegt, dass der Venturiwäscher 12 gleichbleibend und nahezu unabhängig vom in der Sicherheitshülle 2 herrschenden Systemdruck mit einer entsprechend hoch gewählten Strömungsgeschwindigkeit durchströmt wird. Dies wird auch dadurch erreicht, dass die relevanten Druckverluste in der Zuströmleitung vom Containment durch Einsatz von druckverlustarmen Exzenterklappen mit Zeta-Werten < 1, vorzugsweise < 0,5, minimiert werden.

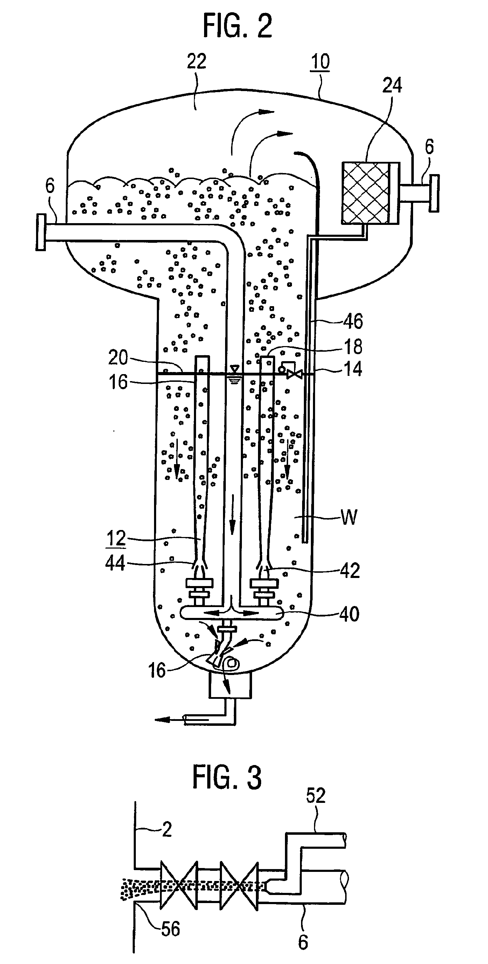

Wie in der vergrößerten Darstellung nach Fig. 2 erkennbar ist, umfasst der Venturiwäscher 12 eine Mehrzahl von Venturirohren 16. Die Venturirohre 16 sind dabei gasstromseitig von einem gemeinsamen, eingangsseitig mit der Druckentlastungsleitung 6 verbundenen Zuführsystem 40 bespeist. Ein vergleichsweise großer Anteil der Venturirohre 16 ist als so genannte Langventurirohre ausgebildet, die mit ihren Auslässen 18 oberhalb des vorgesehenen Sollpegels 20 der Waschflüssigkeit W angeordnet sind und somit in der Art einer "frei ausblasenden" Anordnung direkt in den Gasraum 22 münden. Des Weiteren ist aber auch vorgesehen, eine Verschmutzung oder eine Beeinträchtigung des Betriebsverhaltens des Venturiwäschers 12 durch Ablagerung oder Sedimentation zu verhindern, indem ein vergleichsweise kleiner Anteil, nämlich weniger als 10 %, der Venturirohre 16 schräg abwärts ausgerichtet sind. Durch diese Venturiwirbler wird eine intensive Zirkulation der Waschflüssigkeit W innerhalb des Behälters 14 erreicht, so dass Sedimentation sicher vermieden ist.

Insbesondere die als Langventurirohre ausgeführten Venturirohre 16 sind für eine vergleichsweise hohe Wasserbeladung des behandlungsbedürftigen Gasstroms von mehr als 5, insbesondere mehr als 10, Liter Waschflüssigkeit W pro Kubikmeter Gas ausgeführt. Dazu ist in den Venturirohren 16 im Eintrittsbereich 42 für die Waschflüssigkeit W eine Ringschlitzeinspeisung über den Düsenumfang in einem Öffnungswinkel von 30° bis 45° vorgesehen. Die Dimensionierung ist dabei derart vorgenommen, dass das Verhältnis der an der Verengungsstelle 44 oder so genannten Kehle jedes Venturirohres 16 ermittelten Kehlenquerschnittsfläche zur an der Ringschlitzeinspeisung ermittelten Eintrittsfläche für die Waschflüssigkeit W etwa 3:1 beträgt. Die Verengungsstelle 44 ist im Übrigen auch diejenige Stelle, an der der durchströmende Gasstrom seine maximale Strömungsgeschwindigkeit aufweist; demzufolge wird an der Verengungsstelle 44 auch die für die Auslegung und Abstimmung des Venturiwäschers 12 und der Drosseleinrichtung 24 berücksichtigte Strömungsgeschwindigkeit ermittelt.

Im Ausführungsbeispiel sind die als Langventurirohre ausgeführten Venturirohre 16 als Rundventurirohre mit einer Kehlenbreite von weniger als 40 mm ausgeführt, so dass bei passiver Waschflüssigkeitsansaugung und -verteilung aufgrund des durch das durchströmende Medium erzeugten Unterdrucks eine Einspeisung der Waschflüssigkeit W bis in den Kernstrahlbereich im Inneren des jeweiligen Venturirohres 16 sichergestellt ist. Die Venturirohre 16 weisen darüber hinaus ein Verhältnis von Höhe zu Kehlenbreite von mehr als 10 auf.

Wie der vergrößerten Darstellung nach Fig. 2 zudem noch entnehmbar ist, ist die Drosseleinrichtung 24 zur Tropfenabscheidung mit einem Ablaufrohr 46 versehen, das ausgangsseitig in die Waschflüssigkeit W mündet. Die Drosseleinrichtung 24 ist ihrerseits ausgangsseitig mit der Druckentlastungsleitung 6 verbunden.

Wie weiterhin aus Fig. 1 erkennbar ist, ist zur Ermöglichung einer besonders kompakten Bauweise des Behälters 14 eine mehrkomponentige Bevorratung von Waschflüssigkeit W vorgesehen. Einerseits wird im Behälter 14 Waschflüssigkeit W vorgehalten, in der der Venturiwäscher 12 angeordnet ist. Zusätzlich und ergänzend hierzu ist der Behälter 14 aber waschflüssigkeitsseitig über eine Zuspeiseleitung 48 mit einem weiteren Waschflüssigkeitsspeicher 50 verbunden. Es kann sich beim Waschflüssigkeitsspeicher 50 um ein eigens hierfür konzipiertes Behältnis handeln, das für eine zuverlässige Nachspeisung von Waschflüssigkeit W in den Behälter 14 hinein geodätisch geeignet hoch liegend gewählt ist, wobei sich der Sollpegel 20 der Waschflüssigkeit W im Behälter 14 durch die im weiteren Waschflüssigkeitsspeicher 50 eingestellte Höhe der dort vorgehaltenen Waschflüssigkeit W einstellt. Alternativ kann als weiterer Waschflüssigkeitsspeicher 50 aber auch ein ohnehin vorgesehener Wassertank wie beispielsweise ein Abwasserbehälter, eine Deionatversorgung oder ähnliches vorgesehen sein, wobei die bedarfsweise Nachspeisung von Waschflüssigkeit W in den Behälter 14 hinein über geeignet gewählte Gefälle oder beispielsweise mittels Membranpumpen oder Druckluft erfolgen kann.

Weiterhin ist der Behälter 14 waschflüssigkeitsseitig über eine Rückspeiseleitung 52 mit dem Innenraum der Sicherheitshülle 2 verbunden. Dadurch ist in der Art einer Rezirkulation oder Rückspeisung eine Rückführung von mit luftgetragenen Aktivitäten oder mit Aerosolen belasteter Waschflüssigkeit W aus dem Behälter 14 heraus in die Sicherheitshülle 2 hinein ermöglicht. Damit kann durch ständige oder zyklische Rezirkulation derartig beladener Waschflüssigkeit W die Aktivität in ihrer Gesamtheit besonders zuverlässig im Inneren des Containments oder der Sicherheitshülle 2 gehalten werden, so dass die Gefahr eines Austrags in die Umgebung besonders gering gehalten ist. Gerade durch eine derartige Rezirkulation der Waschflüssigkeit W kann im Übrigen auch die über die zurückgehaltenen Aktivitäten importierte Nachzerfallswärme konsequent aus dem Behälter 14 in die Sicherheitshülle 2 hinein zurück verlagert werden, so dass die Verdampfung von Waschflüssigkeit W im Behälter 14 besonders gering gehalten ist. Trotz der Rezirkulation von Waschflüssigkeit W in den Innenraum der Sicherheitshülle 2 hinein und eine Nachspeisung von Waschflüssigkeit W aus dem weiteren Waschflüssigkeitsspeicher 50 kann damit infolge der vermiedenen Verdampfung der insgesamt anfallende Verbrauch an Waschflüssigkeit W besonders gering gehalten werden.

Wie durch die strichlierte Linie 54 angedeutet, kann die Rückspeiseleitung 52 über die Druckentlastungsleitung 6 mit dem Innenraum der Sicherheitshülle 2 verbunden sein. Wie in der ausschnittsweisen Vergrößerung in Fig. 3 dargestellt, erfolgt die Rezirkulation dabei in der Art einer passiven Ausgestaltung im Gegenstrom zum aus der Sicherheitshülle 2 austretenden Gasstrom, wobei keine zusätzliche Durchführung durch die Sicherheitshülle 2 benötigt wird. Um dabei einen ausreichenden Einspeisedruck für die rückzuspeisende Waschflüssigkeit W sicherzustellen, ist im Ausführungsbeispiel der Behälter 14 mit der darin befindlichen Waschflüssigkeit W in ausreichender geodätischer Höhe, nämlich etwa 10 m oberhalb der Austrittsstelle 56 der Druckentlastungsleitung 6 aus der Sicherheitshülle 2, angeordnet. Allein durch den geodätischen Druck in der Wassersäule in der Rückspeiseleitung 52 ist somit in der Art eines passiven Systems ein ausreichender Rückspeisedruck für die Waschflüssigkeit W in das Containment oder die Sicherheitshülle 2 hinein gewährleistet.

Alternativ kann auch eine zyklische Rückspeisung durch Schließen der Austrittsarmatur bei Überdruck im Containment oder die Nutzung einer separaten Kleinleitung mit geringem unterkritischem Querschnitt und entsprechender Beaufschlagung mit Pumpen, beispielsweise einer Druckluftmembranpumpe oder einer Kreiselpumpe, vorgesehen sein. Die hierfür notwendigen Komponenten, beispielsweise ein Druckluftreservoir 58, sind in Fig. 1 schematisch dargestellt.

Für eine zuverlässige Jodrückhaltung ist der pH-Wert in der Waschflüssigkeit W im Behälter 14 auf einen alkalischen Wert, insbesondere einen Wert von mehr als 9, eingestellt. Dazu erfolgt eine bedarfsweise Zudosierung von NaOH, anderer Laugen und/oder Natriumthiosulfat durch Ansaugung über eine im Frischwasserstrom befindliche Strahlpumpe.

### Bezugszeichenliste

- 1: kerntechnische Anlage
- 2: Sicherheitshülle (Containment)
- 4: Druckentlastungs- und Aktivitätsrückhaltesystem
- 6: Druckentlastungsleitung
- 8: Abblasekamin
- 10: Nasswäscher
- 12: Venturiwäscher
- 14: Behälter
- 16: Venturirohre
- 18: Auslass
- 20: Sollpegel
- 22: Gasraum
- 24: Drosseleinrichtung
- 26: Filtereinrichtung
- 28: Metallfaserfilter
- 30: Zwischendrossel
- 32: Molekularsieb
- 40: Zuführsystem
- 42: Eintrittsbereich
- 44: Verengungsstelle
- 46: Ablaufrohr
- 48: Zuspeiseleitung
- 50: Waschflüssigkeitsspeicher
- 52: Rückspeiseleitung
- 54: strichlierte Linie
- 56: Austrittsstelle
- 58: Druckluftreservoir

- W: Waschflüssigkeit

## Patentansprüche

1. Kerntechnische Anlage (1) mit einer Sicherheitshülle (2), an die eine Druckentlastungsleitung (6) angeschlossen ist, in die in Reihe ein in einem Behälter (14) mit einer Waschflüssigkeit (W) angeordneter Venturiwäscher (12) sowie eine Drosseleinrichtung (24) geschaltet sind, wobei der Venturiwäscher (12) eine Mehrzahl von Venturirohren (16) umfasst, die im Entlastungfall von einem in der Entlastungsleitung (6) strömenden Luft-Dampf-Gemisch durchströmt werden, und die jeweils eine als Kehle bezeichnete Verengungsstelle (44) und eine im Bereich der Verengungsstelle (44) angeordnete Eintrittsöffnung (42) für Waschflüssigkeit (W) ausweisen, und **dadurch gekennzeichnet, daß** die Venturirohr (16) jeweils ein Verhältnis ihrer Kehlenquerschnittsfläche zur Eintrittsfläche für die Waschflüssigkeit (W) von weniger als 10:1 aufweisen, so dass sich bei einer kritischen Entspannung des Luft-Dampf-Gemisches an der Drosseleinrichtung (24) an der Verengungsstelle (44) des jeweiligen Venturirohres (16) eine Strömungsgeschwindigkeit des Luft-Dampf-Gemisches von mehr als 150 m/s einstellt.

2. Kerntechnische Anlage (1) nach Anspruch 1, bei der der Venturiwäscher (12) eine Mehrzahl von Venturirohren (16) umfasst, von denen ein erster Anteil mit ihren Auslässen (18) oberhalb des vorgesehenen Sollpegels (20) der Waschflüssigkeit (W) angeordnet ist, und von denen ein im Vergleich zum ersten Anteil kleinerer Anteil, vorzugsweise bis zu etwa 10 %, mit Auslässen (18) unterhalb des Sollpegels (18) mit abwärts gerichteter Auslassrichtung angeordnet ist.

3. Kerntechnische Anlage (1) nach einem der Ansprüche 1 bis 2, bei der die Venturirohre (16) des Venturiwäschers (12) als Rundventurirohre mit einer Kehlenbreite von weniger als etwa 80 mm, vorzugsweise von weniger als etwa 40 mm, oder als Flachventurirohre mit einer Kehlenbreite von weniger als etwa 100 mm ausgeführt sind.

4. Kerntechnische Anlage (1) nach einem der Ansprüche 1 bis 3, bei der die Venturirohre (16) des Venturiwäschers (12) ein Verhältnis von Höhe zu Kehlenbreite von mehr als 5, vorzugsweise von mehr als 10, aufweisen.

5. Kerntechnische Anlage (1) nach einem der Ansprüche 1 bis 4, deren Behälter (14) waschflüssigkeitsseitig mit einem Waschflüssigkeitsspeicher (50) verbunden ist.

6. Kerntechnische Anlage (1) nach einem der Ansprüche 1 bis 5, deren Behälter (14) waschflüssigkeitsseitig über eine Rückspeiseleitung (52) mit dem Innenraum der Sicherheitshülle (2) verbunden ist.

7. Kerntechnische Anlage (1) nach Anspruch 6, deren Rückspeiseleitung (52) über die Druckentlastungsleitung (6) mit dem Innenraum der Sicherheitshülle (2) verbunden ist.

8. Kerntechnische Anlage (1) nach Anspruch 7, deren Behälter (14) geodätisch zumindest etwa 5 m, vorzugsweise mindestens 10 m, höher liegend als die Austrittsstelle (56) der Druckentlastungsleitung (6) aus der Sicherheitshülle (2) angeordnet ist.

9. Kerntechnische Anlage (1) nach einem der Ansprüche 1 bis 8, in deren Behälter (14) eine Waschflüssigkeit (W) mit einem pH-Wert von mindestens 9 vorgehalten ist.

10. Kerntechnische Anlage (1) nach einem der Ansprüche 1 bis 9, deren Venturiwäscher (12) eine zweifache Schwerkrafttropfenabscheidung mit Tropfenrückführung und/oder ein als Faserabscheider, vorzugsweise mit Fasern < 50 µm mit abfallenden Faserstärken, ausgeführter Metallfaserfilter (28) nachgeschaltet ist.

11. Kerntechnische Anlage (1) nach Anspruch 10, bei der der Metallfaserfilter (28) als Filter mit Fasern einer Faserstärke von bis zu 5 µm, vorzugsweise aus Edelstahlfasern oder gesinterten Faserfiltern mit Poren- oder Faserdurchmessern < 5 µm, ausgebildet ist.

12. Kerntechnische Anlage (1) nach einem der Ansprdüche 1 bis 11, deren Venturiwäscher (12) ein mit Siberverbindungen belegtes Molekularsieb (32) nachgeschaltet ist.

13. Kerntechnische Anlage (1) nach einem der Ansprüche 1 bis 12, bei der die Drosseleinrichtung (24) in den Behälter (14) integriert ist.

## Claims

1. A nuclear facility (1) comprising a containment (2), to which a pressure-relief conduit (6) is connected, in which a venturi scrubber (12) arranged in a container (14) with a scrubbing fluid (W) as well as a throttling device (24) are connected in series, the venturi scrubber (12) comprising a plurality of venturi tubes (16), which are flown through, in case of pressure relief, by an air/steam mixture flowing in the pressure-relief conduit (6) and each of which includes a narrowing spot (44) called gorge and an inlet opening (42) for a scrubbing fluid (W) arranged in the region of the narrowing spot (44),
**characterized in that**
each of the venturi tubes (16) has a ratio between its gorge cross-sectional surface area and the inlet surface area for the scrubbing fluid (W) of less than 10:1, so that in case of a critical pressure drop of the air/steam mixture at the throttling device (24), a flow velocity of the air/steam mixture of more than 150 m/s develops at the narrowing spot (44) of the respective venturi tube (16).

2. The nuclear facility (1) of claim 1, wherein the venturi scrubber (12) comprises a plurality of venturi tubes (16), a first part of which are arranged with their outlets (18) above the intended setpoint level (20) of the scrubbing fluid (W) and a part of which, smaller than the first part, preferably by up to approx. 10 % smaller, are arranged with their outlets (18) below the setpoint level (20), with a downward outlet direction.

3. The nuclear facility (1) of any of claims 1 to 2, wherein the venturi tubes (16) of the venturi scrubber (12) are designed as round venturi tubes with a gorge width of less than approx. 80 mm, preferably of less than approx. 40 mm, or as flat venturi tubes with a gorge width of less than approx. 100 mm.

4. The nuclear facility (1) of any of claims 1 to 3, wherein the ratio between height and gorge width of the venturi tubes (16) of the venturi scrubber (12) is more than 5, preferably more than 10.

5. The nuclear facility (1) of any of claims 1 to 4, whose container (14) is connected on the scrubbing-fluid side with a scrubbing-fluid storage (50).

6. The nuclear facility (1) of any of claims 1 to 5, whose container (14) is connected on the scrubbing-fluid side, via a feedback conduit (52), with the interior of the containment (2).

7. The nuclear facility (1) of claim 6, whose feedback conduit (52) is connected, via the pressure-relief conduit (6), with the interior of the containment (2).

8. The nuclear facility (1) of claim 7, whose container (14) is arranged such that it is situated geodetically at least approx. 5 m, preferably at least 10 m, higher than the exit point (56) of the pressure-relief conduit (6) from the containment (2).

9. The nuclear facility (1) of any of claims 1 to 8, in whose container (14) a scrubbing fluid (W) with a pH value of at least 9 is stored.

10. The nuclear facility (1) of any of claims 1 to 9, comprising, downstream of the venturi scrubber (12), a double gravity-type drop separator with drop recirculation and/or a metal-fiber filter (28) designed as a fiber separator, preferably with fibers < 50 µm with decreasing fiber thicknesses.

11. The nuclear facility (1) of claim 10, wherein the metal-fiber filter (28) is designed as a filter with fibers of a fiber thickness of up to 5 µm, preferably made of stainless-steel fibers or sintered filter fibers with pore or fiber diameters < 5 µm.

12. The nuclear facility (1) of any of claims 1 to 11, comprising, downstream of the venturi scrubber (12), a molecular sieve (32) coated with silver compounds.

13. The nuclear facility (1) of any of claims 1 to 12, wherein the throttling device (24) is integrated in the container (14).

## Revendications

1. Installation nucléaire (1) comprenant une enceinte de confinement (2), à laquelle une conduite de décompression (6) est raccordée, dans laquelle sont montés en série un laveur à Venturi (12) placé dans un récipient (14) contenant un fluide de lavage (W), ainsi qu'un dispositif d'étranglement (24), le laveur à Venturi (12) comprenant une pluralité de tubes de Venturi (16), par lesquels s'écoule, en cas de décompression, un mélange air/vapeur coulant dans la conduite de décompression (6) et chacun desquels comprend un point de rétrécissement (44) appelé gorge et une ouverture d'entrée (43) pour du fluide de lavage (W), disposée dans la zone du point de rétrécissement (44),
**caractérisée en ce que**
le rapport entre la superficie de la section de sa gorge et la superficie d'entrée pour le fluide de lavage (W) de chacun des tubes de Venturi (16) est de moins de 10:1, de sorte que, en cas d'une décompression critique du mélange air/vapeur au dispositif d'étranglement (24), une vitesse d'écoulement du mélange air/vapeur supérieure à 150 m/s s'établit dans le point de rétrécissement (44).

2. Installation nucléaire (1) selon la revendication 1, dans laquelle le laveur à Venturi (12) comprend une pluralité de tubes de Venturi (16), une première partie desquels est placée avec leurs sorties (18) au-dessus du niveau de consigne (20) prévu du fluide de lavage (W) et une partie desquels, inférieure à la première partie, de préférence inférieur d'environ 10 %, est placée avec leurs sorties (18) au-dessous du niveau de consigne (20) prévu, avec une direction de sortie vers le bas.

3. Installation nucléaire (1) selon l'une quelconque des revendications 1 à 2, dans laquelle les tubes de Venturi (16) du laveur à Venturi (12) sont conçus comme tubes de Venturi ronds avec une largeur de gorge de moins d'environ 80 mm, de préférence de moins d'environ 40 mm, ou comme tubes de Venturi plats avec une largeur de gorge de moins d'environ 100 mm.

4. Installation nucléaire (1) selon l'une quelconque des revendications 1 à 3, dans laquelle le rapport entre la hauteur et la largeur de gorge des tubes de Venturi (16) du laveur à Venturi (12) est supérieur à 5, de préférence supérieur à 10.

5. Installation nucléaire (1) selon l'une quelconque des revendications 1 à 4, dont le récipient (14) est raccordé du côté du fluide de lavage à un réservoir (50) de fluide de lavage.

6. Installation nucléaire (1) selon l'une quelconque des revendications 1 à 5, dont le récipient (14) est raccordé du côté du fluide de lavage, au moyen d'une conduite de retour (52), à l'intérieur du confinement (2).

7. Installation nucléaire (1) selon la revendication 6, dont la conduite de retour (52) est raccordée, au moyen de la conduite de décompression (6), à l'intérieur du confinement (2).

8. Installation nucléaire (1) selon la revendication 7, dont le récipient (14) est disposé de sorte qu'il se trouve géodésiquement d'au moins environ 5 m, de préférence au moins 10 m, plus haut que le point de sortie (56) où la conduite de décompression (6) sort du confinement (2).

9. Installation nucléaire (1) selon l'une quelconque des revendications 1 à 8, dans le récipient (14) de laquelle se trouve un fluide de lavage (W) avec une valeur pH d'au moins 9.

10. Installation nucléaire (1) selon l'une quelconque des revendications 1 à 9, comprenant, en aval du laveur à Venturi (12), un double séparateur de gouttes actionné par gravité avec remise en circulation des gouttes et/ou un filtre à fibres métalliques (28) conçu comme séparateur de fibres, de préférence avec des fibres < 50 µm avec des épaisseurs de fibre décroissantes.

11. Installation nucléaire (1) selon la revendication 10, dans laquelle le filtre à fibres métallique (28) est conçu comme un filtre avec fibres d'une épaisseur de jusqu'à 5 µm, de préférence fait de fibres en acier spécial ou de fibres de filtrage frittées de diamètres de pores ou de fibres < 5 µm.

12. Installation nucléaire (1) selon l'une quelconque des revendications 1 à 11, comprenant, en aval du laveur à Venturi (12), un tamis moléculaire (32) revêtu de combinaisons d'argent.

13. Installation nucléaire (1) selon l'une quelconque des revendications 1 à 12, dans laquelle le dispositif d'étranglement (24) est intégré dans le récipient (14).
